# EUROPÄISCHE PATENTSCHRIFT

(11) **EP 0 991 548 B1**
(45) Veröffentlichungstag und Bekanntmachung des Hinweises auf die Patenterteilung: **21.11.2001**
(21) Anmeldenummer: 98936393.2
(22) Anmeldetag: 27.06.1998
(51) Int. Cl.: B60R 16/02

(54) **BENUTZERSPEZIFISCHES FAHRZEUG**
USER-SPECIFIC VEHICLE
VEHICULE SPECIFIQUE A L'UTILISATEUR

(30) Priorität: 02.07.1997 DE 19728226
(43) Veröffentlichungstag der Anmeldung: 12.04.2000
(73) Patentinhaber: ZF FRIEDRICHSHAFEN AG, 88038 Friedrichshafen (DE)
(72) Erfinder: RUNGE, Wolfgang, D-88214 Ravensburg (DE); SCHWARZ, Josef, D-88045 Friedrichshafen (DE)
(86) Internationale Anmeldenummer: EP9803939
(87) Internationale Veröffentlichungsnummer: WO9901315

(56) Entgegenhaltungen:
- DE-A- 3 200 749
- DE-A- 3 609 688
- DE-A- 3 817 495
- DE-A- 4 409 046

## Beschreibung

Die Erfindung bezieht sich auf ein Fahrzeug und befaßt sich insbesondere mit der benutzerspezifischen Konfiguration von Aggregaten.

Dem Stand der Technik sind bereits eine Reihe von Vorschlägen als bekannt zu entnehmen, die darauf abzielen, einzelne Aggregate des Fahrzeugs an die individuellen Anforderungen der Fahrzeuginsassen anzupassen. Bekannt sind beispielsweise sogenannte intelligente Schaltprogramme, die in der Lage sind, den Fahrer zu erkennen und in Abhängigkeit von seiner Fahrweise ein bestimmtes Schaltprogramm zu aktivieren.

Es sind ferner Einrichtungen bekannt, die dem Wiederauffinden einer einmal vorgewählten Sitzposition dienen. Bei dem Sitz nach der DE-C2 40 22 433 ist eine Einrichtung vorgesehen, die der Ermüdung des Fahrers vorbeugen soll. Weitere Vorschläge befassen sich mit der Erkennung von Streßsituationen, hervorgerufen durch plötzliche Gefahrensituationen. In derartigen Situationen kann der Fehlbedienung eines Aggregats entgegengewirkt werden.

Im Handel sind Zubehörsätze (Kits) erhältlich, um die Eigenschaften von Aggregaten nachträglich verändern zu können. Hierzu zählen beispielsweise Software-Kits, mit denen sich beispielsweise das Laufverhalten eines Motors verändern läßt.

Aus der gattungsbildenden DE 32 00 749 A1 ist weiterhin eine Vorrichtung zur automatischen Einstellung und Anpassung von Hilfseinrichtungen im Kraftfahrzeug bekannt, wobei ein codierter Zündschlüssel vorgesehen ist, dessen Code von einer Decodiereinrichtung erfaßbar ist.

Der vorliegenden Erfindung liegt die Aufgabe zugrunde, Möglichkeiten zur benutzerspezifischen Konfiguration eines Fahrzeuges bereitzustellen.

Bei einem Fahrzeug mit verstell- und einstellbaren Aggregaten, wie z. B. Motor, Getriebe, Fahrwerk, Sitz, Wegfahrsperre, Klimaanlage usw., wird zur benutzerspezifischen Konfiguration zumindest eines Aggregats die Identität des Fahrers festgestellt, benutzerspezifischen Eigenschaften abgerufen und anhand der Identität und der benutzerspezifischen Eigenschaften eine benutzerspezifische Einstellung des Aggregats vorgenommen. Erfindungsgemäß wird bei Erkennung eines spezifischen Benutzers ein integriertes Fahrtenbuch aktiviert und es werden die Angaben über die zurückgelegte Fahrstrecke erfaßt und abgespeichert.

Vorteilhafte Ausgestaltungen sind den Ansprüchen 2 bis 6 zu entnehmen.

Der nachfolgenden Erläuterung sind verschiedene Lösungen und die damit verbundenen Vorteile zur benutzerspezifischen Konfiguration eines Fahrzeuges zu entnehmen:

Die Lösungsvorschläge gehen von der Erkenntnis aus, daß zur benutzerspezifischen Konfiguration eines Fahrzeugs bzw. Aggregats Überlegungen leitend sind, wie:
- für wen werden individuelle Einstellungen vorgenommen?
   (Erkennung eines spezifischen Benutzers);
- was wird beeinflußt?
   (benutzerspezifische Eigenschaft);
- welche Einstellungen werden vorgenommen? (benutzerspezifische Einstellung) und
- wann erfolgt die Einstellung sowie ferner mit welchem Medium wird die Einstellung vorgenommen?

### Erkennung eines spezifischen Benutzers:

Die Identität einer bestimmten Person, z. B. des Fahrers oder des Beifahrers, kann anhand von Daten vorgenommen werden, die der Fahrer dem System mitteilt. Geeignete Kenngrößen können durch einen Sender (Transponder) übermittelt werden. Dieser Sender kann beispielsweise im Fingerring oder in der Armbanduhr untergebracht sein. Diese Daten können auch im Systemspeicher abgelegt sein und durch ein geeignetes Medium, wie z. B. die Sprache, eine Chip-Karte, die Eingabe einer persönlichen Identifikations-Nr. oder dergleichen, aktiviert werden. In diesem Zusammenhang ist die Aktivierung der Wegfahrsperre möglich über: die Erkennung des Fingerabdrucks am Schalthebel. Die Deaktivierung der Wegfahrsperre kann mit anderen Variablen, wie z. B. einem Alkoholtest oder dergleichen, kombiniert sein.

### Benutzerspezifische Eigenschaften:

Das persönliche Anforderungsprofil eines Fahrers an die Aggregate eines Fahrzeugs kann vom Fahrer selbst, z. B. beim Neuwagen-Kauf, ausgewählt werden. Benutzerspezifische Eigenschaften können dann durch den Hersteller, z. B. am Bandende bei der Fabrikation des Fahrzeugs, eingestellt werden. Hierbei können auch länderspezifische Anforderungen Berücksichtigung finden. Bei bestimmten benutzerspezifischen Eigenschaften, wie z. B. die Fahrweise, ist es zweckmäßig, diese Eigenschaften jeweils bei Fahrtantritt anzuwählen. Hierzu kann die Wahl der Sitzposition, die Auswahl einer bestimmten Schaltstrategie usw. zählen. In diesem Fall bestimmt der Benutzer selbst die benutzerspezifischen Eigenschaften.

### Benutzerspezifische Einstellung:

Diese Einstellungen lassen sich durch Einlernvorgänge realisieren. Neben der Fahrererkennung kann die Fahrstrecke erlernt werden (Streckenlernfunktion). Es kann ein Schaltprogramm angewählt werden, das den Fahrer auch über die damit verbundenen Konsequenzen informiert. Es kann ein Programm für die Einhaltung bestimmter Höchstgeschwindigkeiten - auch in Abhängigkeit der erlernten Fahrstrecke - aktiviert werden. Wenn das Ergebnis einer Ermittlung der benutzerspezifischen Eigenschaft erkennen läßt, daß der Fahrer unter Streßbelastung steht, können unterstützende Funktionen aufgerufen werden. Hierzu zählen eine kilometerabhängige Weckfunktion, die Programmierung der Höchstgeschwindigkeit, die Anwahl der Bremsfunktion usw.

Zu den Aggregaten, die für benutzerspezifische Einstellungen in erster Linie in Frage kommen, zählen der Motor, das Getriebe, das Fahrwerk, die Klima-Anlage.

Für die benutzerspezifische Einstellung am Bandende eignen sich in erster Linie vorprogrammierte Speicher-Bausteine zur Erkennung des spezifischen Benutzers, seiner spezifischen Eigenschaften und der Vorgabe bzw. der Mittel zum Einlernen bestimmter Vorgänge.

Wenn der Benutzer selbst diese Einstellung übernimmt, bedarf es geeigneter Eingabemöglichkeiten im Fahrzeug selbst. Zur Profileinstellung ist ein Terminal geeignet, bei dem - vergleichbar mit einem Equalizer - über verschieb- oder verdrehbare Stellelemente beispielsweise eine bestimmte Schaltstrategie vorgewählt werden kann.

Über derartige Terminals kann eine definierte Funktionalität eingestellt werden. Dies bedeutet, daß eine Anbzw. Abwahl bestimmter Module manuell möglich ist. Hierzu zählen vor allem: Ausschalten der ABS-Funktion, Zu- oder Abschalten der Tempomat-Funktion, der Antischlupf-Regelung. Beim Bremsvorgang kann eine Hochschaltung verhindert werden.

Die Wahl der Höchstgeschwindigkeit kann länderspezifisch oder in Abhängigkeit des Fahrvermögens des Fahrers vorgewählt werden. Hierbei kann beispielsweise unterschieden werden zwischen einem Anfänger und einem fortgeschrittenen Fahrer.

Als Medium für die benutzerspezifische Konfiguration kommt in Frage: Eine Funkverbindung, die hinsichtlich der Anordnungsfreiheit große Vorteile hat; ein Sprachmodul sowohl zur Identifikation des Fahrers als auch zur Eingabe von Nutzereinstellungen. Zur Personenerkennung kann eine Scannvorrichtung eingesetzt werden.

Die Anzeigesymbole können, ähnlich wie dies dem PC-Benutzer bei der Gestaltung seiner Desk-Top-Oberfläche geläufig ist, programmierbar sein. Schalt- und Anzeigesymbole können hinzugefügt bzw. abgewählt werden. Die Größe der Symbole bzw. Anzeigeinstrumente sowie deren optisches Aussehen kann frei wählbar sein. Zur Eingabe der Personenerkennung der benutzerspezifischen Eigenschaften zur benutzerspezifischen Einstellung kann eine Chip-Karte eingesetzt werden. Geeignete Informationen können in einem Speichermodul innerhalb des Schlüssels abgelegt sein, die zudem, wenn der Schlüssel als Transponder eingesetzt wird, an das Fahrzeugsystem - in der Regel beim Öffnen der Fahrzeugtür - übermittelt werden.

## Patentansprüche

1. Fahrzeug mit verstell- und einstellbaren Aggregaten, wie z. B. Motor, Getriebe, Fahrwerk, Sitz, Wegfahrsperre, Klimaanlage, wobei zur benutzerspezifischen Konfiguration zumindest eines Aggregats die Identität des Fahrers anhand von Daten ermittelt wird, die der Fahrer dem System mitteilt, die benutzerspezifischen Eigenschaften abgerufen und anhand der Identität und der benutzerspezifischen Eigenschaften eine benutzerspezifische Einstellung des Aggregats erfolgt, **dadurch gekennzeichnet, daß** bei Erkennung eines spezifischen Benutzers ein integriertes Fahrtenbuch aktiviert wird und Angaben über die zurückgelegte Fahrstrecke erfaßt und abgespeichert werden.

2. Fahrzeug nach Anspruch 1, **dadurch gekennzeichnet, daß** die benutzerspezifischen Daten in einem Systemspeicher abgelegt sind und durch ein geeignetes Medium, wie z. B. die Sprache, eine Chip-Karte, die Eingabe einer persönlichen Identifikations-Nummer oder dergleichen, aktiviert werden.

3. Fahrzeug nach Anspruch 1, **dadurch gekennzeichnet, daß** Betriebsparameter, wie z. B. die Höchstgeschwindigkeit des Fahrzeugs, länderspezifisch oder in Abhängigkeit des Fahrvermögens des Fahrers, vorwählbar sind.

4. Fahrzeug nach einem der vorhergehenden Ansprüche, **dadurch gekennzeichnet, daß** als Medium für die benutzerspezifische Konfiguration eine Funkverbindung, ein Sprachmodul oder eine Scannvorrichtung eingesetzt werden.

5. Fahrzeug nach einem der vorhergehenden Ansprüche, **dadurch gekennzeichnet, daß** zur Eingabe der Personenerkennung und der benutzerspezifischen Eigenschaften zur benutzerspezifischen Einstellung eines Aggregats ein Speichermodul verwendet wird und daß die abgelegten Informationen dem Fahrzeugsystem, z. B. beim Öffnen der Fahrzeugtür, übermittelt werden.

6. Fahrzeug nach Anspruch 1, wobei die benutzerspezifische Einstellung durch Einlernvorgänge erfolgt, **dadurch gekennzeichnet, daß** die Fahrstrecke erlernt wird.

## Claims

1. Vehicle with units which can be adjusted and set, such as, e.g. engine, transmission, chassis, seat, immobilizer, air conditioning system, wherein, for the user-specific configuration of at least one unit, the identity of the driver is determined on the basis of data which the driver communicates to the system, the user-specific features are called up and a user-specific setting of the unit takes place on the basis of the identity and the user-specific features, **characterised in that** upon identification of a specific user an integrated log-book is activated and information on the covered route is acquired and stored.

2. Vehicle according to Claim 1, **characterised in that** the user-specific data are stored in a system memory and activated by an appropriate medium, such as, e.g. the voice, a chip-card, the input of a personal identification number or similar.

3. Vehicle according to Claim 1, **characterised in that** operating parameters, such as, e.g. the maximum speed of the vehicle, can be preselected in country-specific fashion or in accordance with the driving ability of the driver.

4. Vehicle according to any one of the preceding Claims, **characterised in that** a radio link, a voice module or a scanning device is used as the medium for the user-specific configuration.

5. Vehicle according to any one of the preceding Claims, **characterised in that** a memory module is used to input the personal identification and user-specific features for the user-specific setting of a unit, and that the stored information is transmitted to the vehicle system, e.g. upon opening the vehicle door.

6. Vehicle according to Claim 1, wherein the user-specific setting takes place through teach-in processes, **characterised in that** the route is learnt.

## Revendications

1. Véhicule équipé d'organes pouvant être commandés et réglés, tels que par exemple, un moteur, une boîte de vitesses, un train roulant, un siège, un verrouillage antidémarrage, une installation de climatisation, dans lequel, pour donner à au moins un organe une configuration spécifique à l'utilisateur, l'identité du conducteur est vérifiée au moyen de données que le conducteur notifie au système, les propriétés spécifiques à l'utilisateur sont appelées et, sur la base de l'identité et des propriétés spécifiques à l'utilisateur, il s'effectue un réglage spécifique à l'utilisateur de l'organe considéré, **caractérisé en ce que**, lors de l'identification d'un utilisateur spécifique, un livret de contrôle intégré est activé et des indications concernant le trajet parcouru sont relevées et mémorisées.

2. Véhicule selon la revendication 1, **caractérisé en ce que** les données spécifiques à l'utilisateur sont mémorisées dans une mémoire du système et sont activées par un milieu approprié tel que par exemple, la parole, une carte à puce, l'entrée d'un numéro d'identification personnel ou similaire.

3. Véhicule selon la revendication 1, **caractérisé en ce que** les paramètres de fonctionnement, par exemple la vitesse maximale du véhicule, peuvent être présélectionnés d'une façon spécifique au pays ou en fonction de la capacité de conduite du conducteur.

4. Véhicule selon l'une quelconque des revendications précédentes, **caractérisé en ce qu'**on utilise comme milieu pour la configuration spécifique à l'utilisateur, une liaison radioélectrique, un module vocal ou un scanner.

5. Véhicule selon l'une quelconque des revendications précédentes, **caractérisé en ce qu'**un module de mémoire est utilisé pour entrer l'identification de la personne et les propriétés spécifiques à l'utilisateur qui servent au réglage spécifique à l'utilisateur de l'organe considéré, et **en ce que** les informations mémorisées sont transmises au système du véhicule, par exemple au moment de l'ouverture de la porte du véhicule.

6. Véhicule selon la revendication 1, dans lequel le réglage spécifique de l'utilisateur s'effectue par des opérations d'apprentissage, **caractérisé en ce que** le parcours est appris.
